# EUROPÄISCHE PATENTSCHRIFT

(11) **EP 1 164 039 B1**
(45) Veröffentlichungstag und Bekanntmachung des Hinweises auf die Patenterteilung: **17.05.2006**
(21) Anmeldenummer: 01112643.0
(22) Anmeldetag: 25.05.2001
(51) Int. Cl.: B60J 7/12

(54) **Cabriolet-Fahrzeug**
Convertible vehicle
Véhicule convertible

(30) Priorität: 15.06.2000 DE 20010642 U
(43) Veröffentlichungstag der Anmeldung: 19.12.2001
(73) Patentinhaber: Wilhelm Karmann GmbH, 49084 Osnabrück (DE)
(72) Erfinder: Wagner, Tobias, 21149 Hamburg (DE)
(74) Vertreter: Busse & Busse Patentanwälte

(56) Entgegenhaltungen:
- EP-A- 0 332 810
- EP-A- 0 819 558
- DE-C- 4 129 493
- DE-C- 19 618 296
- US-A- 4 991 902
- US-A- 5 918 928

## Beschreibung

Die Erfindung betrifft ein Cabriolet-Fahrzeug mit einem eine flexible Dachhaut aufweisenden Faltverdeck gemäß dem Oberbegriff des Anspruchs 1.

Die Erfindung befaßt sich mit dem Problem, ein Cabriolet-Fahrzeug der aus DE 196 18 296 C 1 bekannten Art zu schaffen, dessen im Heckbereich einen mehrteiligen Verdeckspannbügel aufweisendes Verdeck zur Verbesserung der Durchsicht im Heckbereich eine vergrößerte Heckscheibe aufweist und diese mit dem Verdeck in einer raumsparenden Packstellung im Verdeckkasten ablegbar ist.

Die Erfindung löst dieses Problem mit einem Cabriolet-Fahrzeug mit den Merkmalen des Anspruchs 1. Hinsichtlich wesentlicher weiterer Ausgestaltungen der Erfindung wird auf die Ansprüche 2 bis 14 verwiesen.

Bei dem Cabriolet-Fahrzeug mit dem dreiteilig ausgebildeten Verdeckspannbügel weisen dessen spiegelbildlich angeordnete Seitenteile im Bereich ihrer erfindungsgemäß ausgebildeten Verbindungsgelenke zum Mittelteil hin jeweils eine im wesentlichen senkrecht zur vertikalen Fahrzeuglängsmittelebene verlaufende Stützachse auf. Durch diese Stützachsen ist der Heckscheibe eine definierte Kippstellung vermittelbar, wobei der Mittelteil des Verdeckspannbügels und ein mit der Heckscheibe verbundener Dachhautbereich des Faltverdecks nach Art einer Schwenksteuerung verlagert werden.

Die in die Dachhaut integrierte Heckscheibe grenzt mit ihrem unteren Querseitenrand unmittelbar an den schwenkbaren Mittelteil so an, daß bei einer gemeinsamen Verlagerung dieser Baugruppe eine optimale Bewegung des heckseitigen Bereiches des Faltverdecks erfolgt und dieses mit der Heckscheibe auf einer engen und geringen Freiraum erfordernden Bewegungsbahn in den karosserieseitigen Verdeckkasten verlagert bzw. aus diesem heraus bewegt wird. Die Heckscheibe kann in ihrer Ablagestellung im Verdeckkasten zwangsgesteuert durch die beiden Stützachsen nach vorn gekippt werden, so daß die Heckscheibe mit ihrer flachen oder konvexen Scheibenkontur bis auf die Ebene der Seitenteile des Verdeckspannbügels abgesenkt und damit eine vorteilhaft enge Packstellung erreicht wird.

In der Schließstellung des Faltverdecks ist für den Fahrzeugbenutzer die Durchsicht im Bereich der Heckscheibe dadurch verbessert, daß sich diese bis unmittelbar auf den Mittelteil des Verdeckspannbügels erstreckt und damit eine erweiterte Durchsichtzone gebildet ist.

Mit der Ausbildung des kippbaren Mittelteils am Verdeckspannbügel wird die Möglichkeit einer direkten Verbindung des Verdeckspannbügels mit einer aus Festglas bestehenden Heckscheibe eröffnet, wobei diese in ihrer Umfangskontur an weitgehend beliebige Ausführungen des Faltverdecks anpaßbar ist und durch die Schwenk- bzw. Kippstellung auch großflächige Scheiben einfach handhabbar und raumsparend ablegbar sind.

Weitere Merkmale und vorteilhafte Ausgestaltungen der Erfindung ergeben sich aus der nachfolgenden Beschreibung und der Zeichnung, in der ein Ausführungsbeispiel des Gegenstands der Erfindung dargestellt ist. In der Zeichnung zeigen:
- Fig. 1: eine Heckansicht eines Cabriolet-Fahrzeuges mit einem Faltverdeck in Schließstellung,
- Fig. 2: eine teilweise geschnittene Seitenansicht des erfindungsgemäßen Cabriolet-Fahrzeugs im Heckbereich,
- Fig. 3: eine vergrößerte Ausschnittsdarstellung des Faltverdecks mit einem Verdeckspannbügel und einer über diesem verlaufenden Heckscheibe,
- Fig. 4: eine Seitenansicht gemäß einer Linie III-III in Fig. 3,
- Fig. 5: eine perspektivische Heckansicht ähnlich Fig. 3 mit der Heckscheibe in Ablagestellung im Verdeckkasten,
- Fig. 6: eine teilweise geschnittene Seitenansicht ähnlich Fig. 2 mit der Ablagestellung des Faltverdecks gemäß Fig. 5, und
- Fig. 7: eine vergrößerte Ausschnittsdarstellung der Ablagestellung gemäß Fig. 6 mit dem dreiteiligen Verdeckspannbügel und der an diesem befindlichen Heckscheibe im Verdeckkasten.

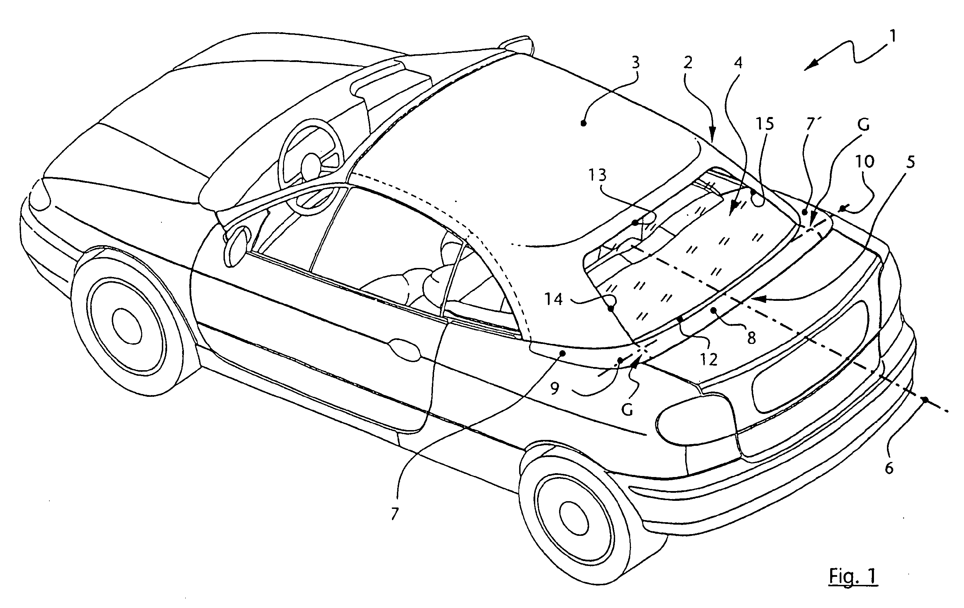

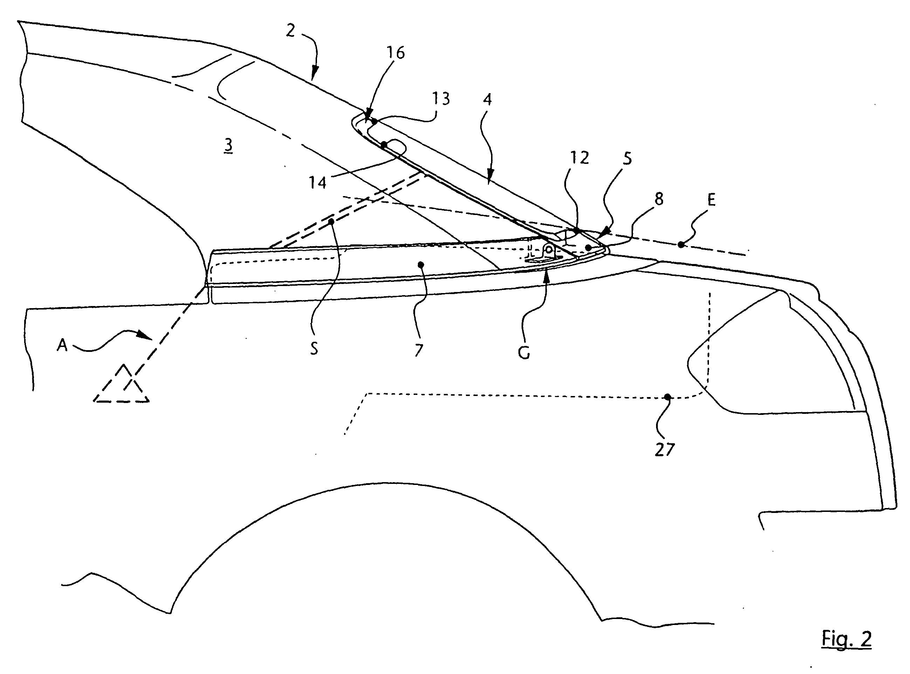

In Fig. 1 ist ein insgesamt mit 1 bezeichnetes Cabriolet-Fahrzeug dargestellt, dessen Faltverdeck 2 insbesondere mit einer flexiblen Dachhaut 3 versehen ist. Im Heckbereich des Fahrzeugs 1 ist ein unterhalb einer aus Festglas bestehenden Heckscheibe 4 verlaufender und an seitlichen Hauptschwenklagern (Baugruppe A, Prinzipdarstellung in Fig. 2) karosserieseitig abgestützter Verdeckspannbügel 5 vorgesehen. Der Verdeckspannbügel 5 weist in einer an sich bekannten dreiteiligen Ausbildung zwei spiegelbildlich zur Fahrzeuglängsmittelebene verlaufende Seitenteile 7 und 7' auf, die im Bereich jeweiliger Gelenke G mit einem Mittelteil 8 verbunden sind.

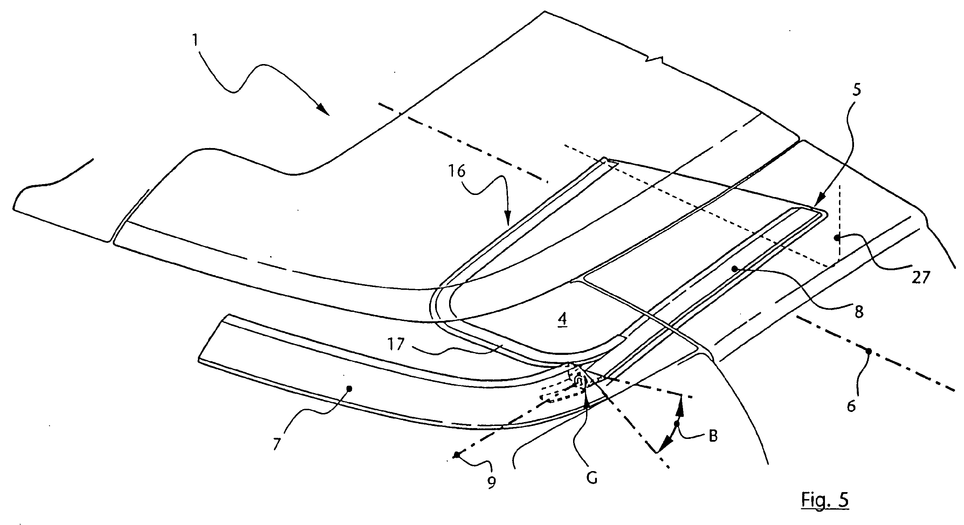

Bei dem erfindungsgemäßen Cabriolet-Fahrzeug weist der Verdeckspannbügel 5 Verbindungsgelenke G auf, mit denen die beiden Seitenteile 7, 7' jeweils durch eine im wesentlichen senkrecht zur Fahrzeuglängsmittelebene 6 verlaufende Stützachse 9 bzw. 10 am Mittelteil 8 abgestützt sind. Bei spiegelbildlichem Aufbau der Konstruktion versteht es sich, daß diese beiden Stützachsen 9 und 10 fluchtend zueinander angeordnet sind (Fig. 1). Der Mittelteil 8 ist im Bereich der beiden Verbindungsgelenke G unabhängig von den beiden karosserieseitig abgestützten Seitenteilen 7, 7' in Fahrzeuglängsrichtung um die jeweiligen Stützachsen 9 und 10 schwenkbar (Fig. 5).

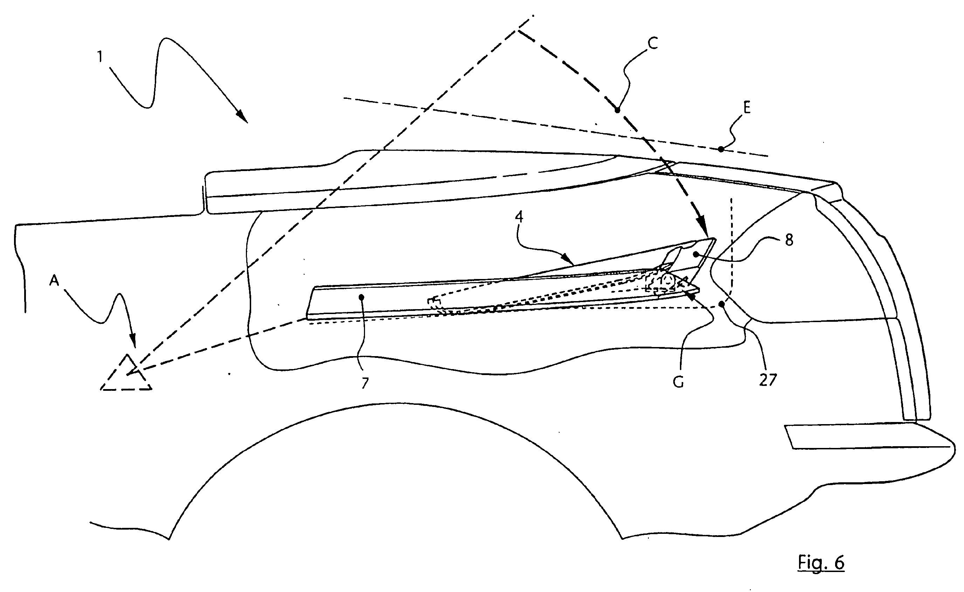

Diese zusätzliche Schwenkbewegung (Pfeil B) im Bereich des Mittelteils 8 des Verdeckspannbügels 5 ist bei der Bewegung des Faltverdecks 2 zwangsgesteuert. Mit an sich bekannter Verdeckkinematik werden bei der gesteuerten Bewegung des Faltverdecks 2 die drei Teile 7, 7' und 8 des Verdeckspannbügels 5 sowie die Heckscheibe 4 gemeinsam in die jeweilige Öffnungs- bzw. Schließstellung verlagert. Diese Bauteile sind für diese Bewegungssteuerung über nicht näher dargestellte Verbindungsteile in die Verdeckkinematik so integriert, daß bei Bewegung der Gestellteile um das seitliche Hauptschwenklager A dem Heckbereich des Faltverdecks 2 eine entsprechende Bewegung auf einer Bahnkurve (Pfeil C, Fig. 6) vermittelt und der Verdeckspannbügel 5 gemeinsam mit der Heckscheibe 4 in die Öffnungsstellung (Fig. 6) verlagert und im Heckbereich der Karosserie abgelegt werden kann.

Mit der erfindungsgemäßen Abstützung des Mittelteils 8 durch die Stützachsen 9 und 10 ist eine Bewegung des Mittelteils 8 so möglich, daß dessen Kippung die Ablagestellung der Heckscheibe 8 im Verdeckkasten 11 (Fig. 6) bestimmt. Diese vorteilhaft enge Packstellung nach dem Kippen des Mittelteils 8 kann auch dann erreicht werden, wenn sich in an sich bekannter Ausführung die flexible Dachhaut 2 auch im Bereich zwischen dem Verdeckspannbügel 5 und der Heckscheibe 4 erstreckt (nicht dargestellt).

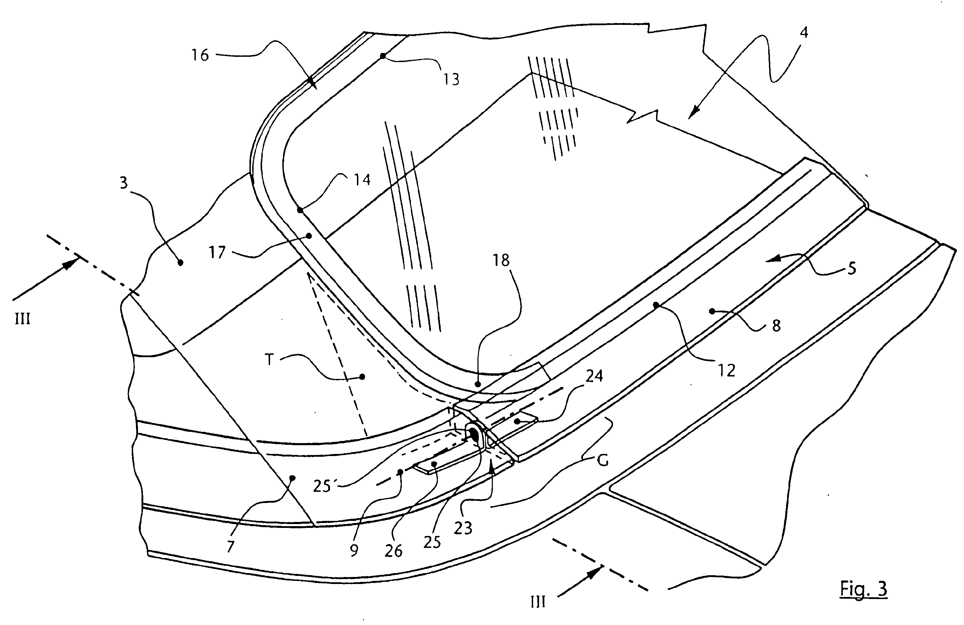

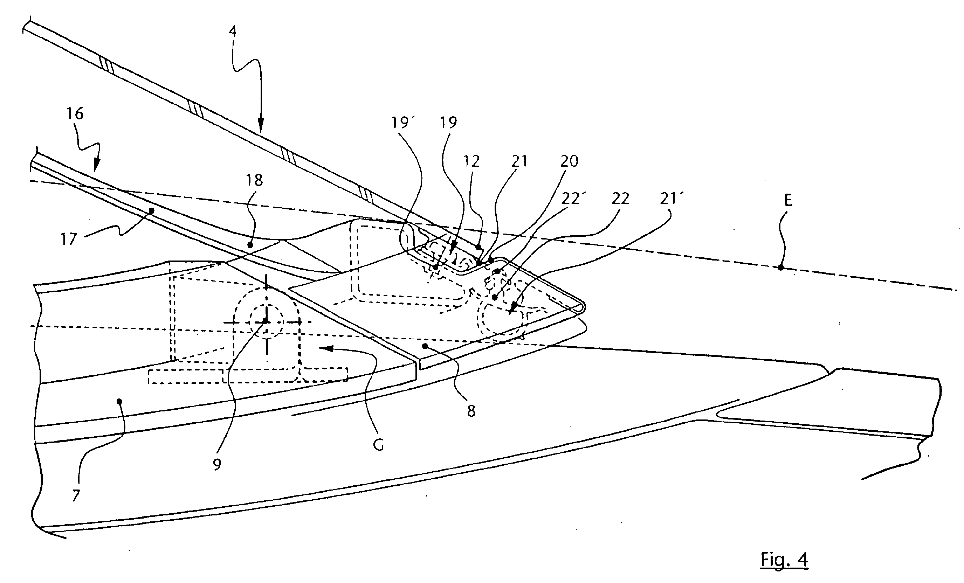

In vorteilhafter Weiterbildung des erfindungsgemäßen Verdeckspannbügels 5 weist dessen Mittelteil 8 eine unmittelbare Verbindung zur Heckscheibe 4 auf, wobei die Darstellung in Fig. 3 verdeutlicht, daß das Mittelteil 8 direkt einen unteren Querseitenrand 12 der Heckscheibe 4 untergreift bzw. diese auf dem Mittelteil 8 abstützt (Fig. 4). Im Bereich ihres oberen Querseitenrandes 13 sowie der jeweiligen Längsseitenränder 14 und 15 ist die Heckscheibe 4 in die flexible Dachhaut 3 integriert, wobei eine Vielzahl möglicher Anbindungen, beispielsweise durch Rahmen-, Steck-, Klebeverbindungen o. dgl. denkbar ist.

In der dargestellten Ausführungsform (Fig. 2 bis Fig. 7) ist die aus Festglas gebildete Heckscheibe 4 von einem im wesentlichen U-förmig verlaufenden sowie zum Mittelteil 8 des Verdeckspannbügels 5 hin offenen Tragrahmen 16 umfaßt. Der Tragrahmen 16 weist dabei jeweilige spiegelbildlich verlaufende Seitenschenkel 17 (von denen nur einer sichtbar ist, Fig. 3) auf, die im Bereich einer zum Verdeckspannbügel 5 hin verlaufenden Radienkontur 18 mit dem Mittelteil 8 des Verdeckspannbügels 5 verbunden sind. Der Tragrahmen 16 kann zu seiner zwangsgesteuerten Bewegung durch jeweilige in Prinzipdarstellung mit Strichlinien angedeutete Stützteile S (Fig. 2) mit der Verdeckkinematik (Hautschwenklager A) verbunden sein, so daß die Teile der Baugruppe gemeinsam verlagerbar sind.

Mit dieser integralen Bauweise von Tragrahmen 16 und Verdeckspannbügel 5 bzw. Mittelteil 8 kann die Heckscheibe 4 vorteilhaft so erweitert werden, daß damit die verfügbare Sichtfläche im Heckbereich des Fahrzeugs vergrößert ist. Für einen im Innenraum des Fahrzeugs sitzenden Nutzer ist eine sich bis in eine Ebene E (Fig. 2, Fig. 4) erstreckende Durchsichtszone erreicht und mit dieser Erweiterung die Bediensicherheit des Fahrzeugs insgesamt verbessert.

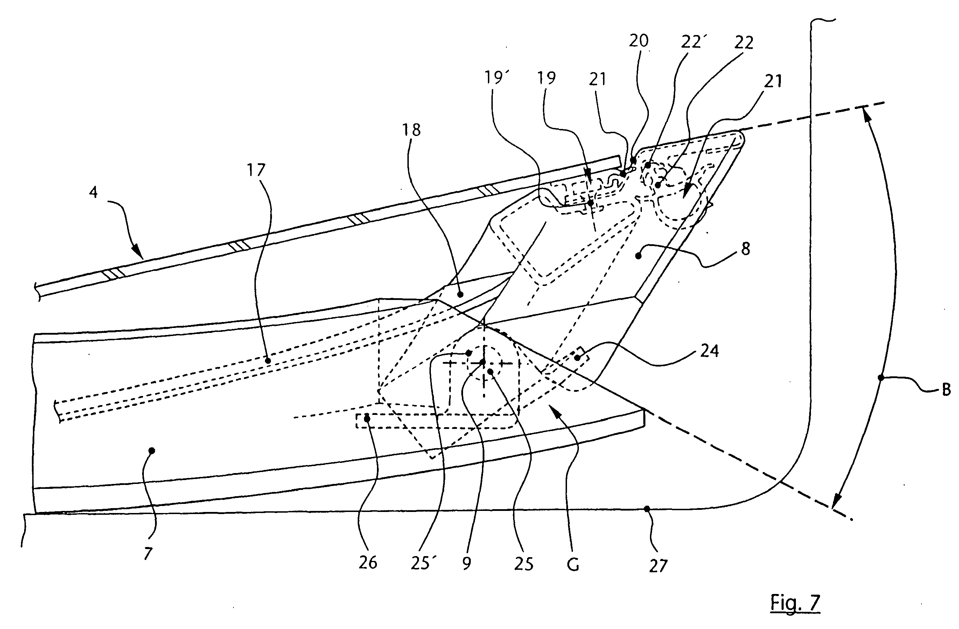

Die vergrößerten Ausschnittsdarstellungen gemäß Fig. 4 und 7 verdeutlichen mit einer Strichdarstellung den Aufbau des Mittelteils 8, der an seiner die Heckscheibe 4 abstützenden Oberseite eine ein Scheibenhalterungsteil 19 aufnehmende Längsnut 20 aufweist. In der dargestellten Ausführung ist als Scheibenhalterung 19 eine Schraub- oder Stiftverbindung 19' vorgesehen, in deren Bereich die Längsnut 20 über Dichtungsteile 21 fluiddicht verschlossen ist.

Im Nahbereich der Längsnut 20 ist an der Unterseite des Mittelteils 8 ein in der dargestellten Schließstellung (Fig. 4) des Faltverdecks 2 karosserieseitig auflegbares Dichtungsprofil 21' vorgesehen, das insbesondere über einen Rasthaken 22 in eine Aufnahmeöffnung 22' des Querschnittsprofils des Mittelteils 8 eingreift.

Die beiden Verbindungsgelenke G sind jeweils mit einem die Stützachse 9, 10 definierenden Zapfengelenk 23 (Fig. 3) versehen, dessen an einem Stützwinkel 24 befindlicher Zapfenteil 25 in eine Aufnahmeöffnung 25' eines gegenüberliegend zugeordneten zweiten Stützwinkels 26 eingreift. An Stelle dieser mechanisch einfach aufgebauten Verbindungskonstruktion im Bereich der Gelenke G sind auch weitere, nicht dargestellte Schwenklagerungen denkbar.

In Fig. 3 ist mit einer unterbrochenen Linie eine Stofftasche T im Faltverdeck 2 bzw. in der Dachhaut 3 verdeutlicht, wobei sich die Stofftasche T im Winkelbereich zwischen den jeweiligen Rahmenschenkeln 17 des Tragrahmens 16 und dem jeweiligen Seitenteil 7 bzw. 7' des Verdeckspannbügels 5 erstreckt. Bei Verlagerung des Faltverdecks 2 in die Öffnungsstellung (Fig. 6, Fig. 7) werden durch die beiden spiegelbildlich angeordneten Stofftaschen T entsprechende Ausgleichsbereiche an der Dachhaut 3 wirksam, so daß diese ohne nachteilige Überbelastungen oder Überdehnungen in die Öffnungsstellung bis in den Verdeckkasten 11 verlagert und in diesem der Mittelteil 8 in die dargestellte Ablagestellung (Fig. 7) gekippt werden kann.

## Patentansprüche

1. Cabriolet-Fahrzeug mit einem eine flexible Dachhaut (3) aufweisenden Faltverdeck (2), das im Heckbereich einen unterhalb einer Heckscheibe (4) verlaufenden und an seitlichen Hauptschwenklagern (A) karosserieseitig abgestützten Verdeck-Spannbügel (5) aufweist, der in dreiteiliger Ausbildung mit zwei spiegelbildlich zur Fahrzeuglängsmittelebene (6) angeordneten Seitenteilen (7, 7') sowie einem Mittelteil (8) versehen ist, wobei dieser jeweils durch Verbindungsgelenke (G) mit den Seitenteilen (7, 7') verbunden ist, **dadurch gekennzeichnet, daß** die beiden Verbindungsgelenke (G) am Mittelteil (8) des Verdeckspannbügels (5) jeweils mit einer im wesentlichen senkrecht zur vertikalen Fahrzeuglängsmittelebene (6) verlaufenden Stützachse (9, 10) zum Seitenteil (7, 7') versehen sind.

2. Cabriolet-Fahrzeug nach Anspruch 1, **dadurch gekennzeichnet, daß** der Mittelteil (8) im Bereich der beiden Verbindungsgelenke (G) unabhängig von den beiden karosserieseitig abgestützten Seitenteilen (7, 7') in Fahrzeuglängsrichtung schwenkbar ist.

3. Cabriolet-Fahrzeug nach Anspruch 1 oder 2, **dadurch gekennzeichnet, daß** die Schwenkbewegung (Pfeil B) des Mittelteils (8) zwangsgesteuert ist.

4. Cabriolet-Fahrzeug nach einem der Ansprüche 1 bis 3, **dadurch gekennzeichnet, daß** bei einer Bewegung des Faltverdecks (2) die drei Teile (7, 7', 8) des Verdeckspannbügels (5) und die Heckscheibe (4) gemeinsam in die Öffnungs- bzw. Schließstellung verlagerbar sind.

5. Cabriolet-Fahrzeug nach einem der Ansprüche 1 bis 4, **dadurch gekennzeichnet, daß** bei Bewegung des Faltverdecks (2) nur der Mittelteil (8) des Verdeckspannbügels (5) mit der Heckscheibe (4) verschwenkbar ist.

6. Cabriolet-Fahrzeug nach einem der Ansprüche 1 bis 5, **dadurch gekennzeichnet, daß** der Mittelteil (8) eine Verbindung zur Heckscheibe (4) aufweist.

7. Cabriolet-Fahrzeug nach einem der Ansprüche 1 bis 6, **dadurch gekennzeichnet, daß** der Mittelteil (8) unmittelbar mit einem unteren Querseitenrand (12) der Heckscheibe (4) verbunden ist und diese nur im Bereich ihres oberen Querseitenrandes (13) sowie jeweiliger Längsseitenränder (14, 15) in die flexible Dachhaut (3) des Faltverdecks (2) integriert ist.

8. Cabriolet-Fahrzeug nach einem der Ansprüche 1 bis 7, **dadurch gekennzeichnet, daß** die Heckscheibe (4) aus Festglas besteht und von einem im wesentlichen U-förmigen verlaufenden sowie zum Mittelteil (8) hin offenen Tragrahmen (16) umfaßt ist.

9. Cabriolet-Fahrzeug nach einem der Ansprüche 1 bis 8, **dadurch gekennzeichnet, daß** der Mittelteil (8) des Verdeckspannbügels (5) mit den beiden Seitenschenkeln (17) des U-förmigen Tragrahmens (16) im Bereich einer Radienkontur (18) verbunden ist.

10. Cabriolet-Fahrzeug nach einem der Ansprüche 1 bis 9, **dadurch gekennzeichnet, daß** die beiden Verbindungsgelenke (G) jeweils als ein die Stützachse (9, 10) definierendes Zapfengelenk (23) ausgebildet sind, dessen an einem Stützwinkel (24) befindlicher Zapfenteil (25) in eine Aufnahmeöffnung (25') eines gegenüberliegend zugeordneten Stützwinkels (26) eingreift.

11. Cabriolet-Fahrzeug nach einem der Ansprüche 1 bis 10, **dadurch gekennzeichnet, daß** der Mittelteil (8) an seiner die Heckscheibe (4) abstützenden Oberseite eine ein Scheibenhalterungsteil (19) aufnehmende Längsnut (20) aufweist und dieser gegenüberliegend an der Unterseite des Mittelteils (8) ein in Schließstellung des Faltverdecks (2) karosserieseitig auflegbares Dichtungsprofil (21') vorgesehen ist.

12. Cabriolet-Fahrzeug nach einem der Ansprüche 1 bis 11, **dadurch gekennzeichnet, daß** die Dachhaut (3) im Winkelbereich zwischen den Rahmenschenkeln (17) des Tragrahmens (16) und den Seitenteilen (7, 7') des Verdeckspannbügels (5) mit einer Stofftasche (T) versehen ist.

13. Cabriolet-Fahrzeug nach einem der Ansprüche 1 bis 12, **dadurch gekennzeichnet, daß** der Tragrahmen (16) der Heckscheibe (4) jeweilige mit der Verdeckkinematik (A) des Faltverdecks (2) verbundene Stützteile (S) aufweist.

14. Cabriolet-Fahrzeug nach einem der Ansprüche 1 bis 13, **dadurch gekennzeichnet, daß** die gemeinsame Bewegung von Heckscheibe (4) und Tragrahmen (16) durch eine Verlagerung des heckseitigen Dachhautbereichs (3) gesteuert ist.

## Claims

1. Convertible vehicle having a folding top (2) having a flexible roof-skin (3), which folding top (2) has, in the rear region of the vehicle, a folding-top tensioning bow (5) which extends below a rear window (4), which is supported at the bodywork on main pivot mountings (A) and which, when in three-part form, is provided with side-parts (7, 7') which are arranged as mirror images about the longitudinal centre plane (6) of the vehicle and with a centre part (8), the latter being connected to the side-parts (7, 7') by respective connecting joints (G), **characterised in that** the two connecting joints (G) on the centre part (8) of the folding-top tensioning bow (5) are provided with respective axes of support (9, 10) relative to the side-parts (7, 7'), which axes of support (9, 10) extend substantially perpendicularly to the vertical longitudinal centre plane (6) of the vehicle.

2. Convertible vehicle according to claim 1, **characterised in that**, in the region of the two connecting joints (G), the centre part (8) is pivotable in the longitudinal direction of the vehicle independently of the two side-parts (7, 7') which are supported on the bodywork.

3. Convertible vehicle according to claim 1 or 2, **characterised in that** the pivoting movement (arrow B) of the centre part (8) is positively controlled.

4. Convertible vehicle according to one of claims 1 to 3, **characterised in that**, when the folding top (2) moves, the three parts (7, 7', 8) of the folding-top tensioning bow (5), and the rear window (4), can be moved in unison to the lowered or raised position.

5. Convertible vehicle according to one of claims 1 to 4, **characterised in that**, when the folding top (2) moves, only the centre part (8) of the folding-top tensioning bow (5) is pivotable with the rear window (4).

6. Convertible vehicle according to one of claims 1 to 5, **characterised in that** the centre part (8) has a connection to the rear window (4).

7. Convertible vehicle according to one of claims 1 to 6, **characterised in that** the centre part (8) is directly connected to a lower transverse side edge (12) of the rear window (4) and the rear window (4) is incorporated into the flexible roof-skin (3) of the folding top (2) only in the region of its upper transverse side edge (13) and of each of its longitudinal side edges (14, 15).

8. Convertible vehicle according to one of claims 1 to 7, **characterised in that** the rear window (4) is composed of solid glass and is enclosed by a supporting frame (16) which extends substantially in a U-shape and which is open towards the centre part (8).

9. Convertible vehicle according to one of claims 1 to 8, **characterised in that** the centre part (8) of the folding-top tensioning bow (5) is connected to the two side-limbs (17) of the U-shaped supporting frame (16) in the region of a radiused contour (18).

10. Convertible vehicle according to one of claims 1 to 9, **characterised in that** the two connecting joints (G) are each in the form of a hinge-pin joint (23) which defines the axis of support (9, 10) and whose hinge-pin part (25), which is situated on a supporting angle (24), engages in a receiving opening (25') in an associated supporting angle (26) situated opposite.

11. Convertible vehicle according to one of claims 1 to 10, **characterised in that** the centre part (8) has, in its upper side which supports the rear window (4), a longitudinal groove (20) which receives a window mounting part (19) and there is provided, opposite the longitudinal groove (20), on the underside of the centre part (8), a sealing profile (21') which can be laid down on the bodywork when the folding top (2) is in the raised position.

12. Convertible vehicle according to one of claims 1 to 11, **characterised in that** the roof-skin (3) is provided with a pocket of material (T) in the angled region between the limbs (17) of the supporting frame (16) and the side-parts of the folding-top tensioning bow (5).

13. Convertible vehicle according to one of claims 1 to 12, **characterised in that** the supporting frame (16) of the rear window (4) has support parts (S) which are each connected to the kinematic mechanism (A) of the folding top.

14. Convertible vehicle according to one of claims 1 to 13, **characterised in that** the movement in unison of the rear window (4) and the supporting frame (16) is controlled by a displacement of the rear region (3) of the roof-skin.

## Revendications

1. Véhicule cabriolet (1) dont le toit souple (3) comporte une capote pliable (2) ainsi qu'un étrier de fixation de la capote (5) s'appuyant côté carrosserie sur des fusées principales (A) latérales, s'étendant sous une lunette arrière (4) et pourvu dans une conception en trois parties de deux parties latérales (7, 7') disposées en symétrie par rapport au plan médian longitudinal du véhicule (6) ainsi que d'une partie centrale (8), cette dernière étant reliée respectivement aux parties latérales (7, 7') par des articulations de liaison (G),
**caractérisé en ce que**
les deux articulations de liaison (G) sur la partie centrale (8) de l'étrier de fixation de la capote (5) sont respectivement pourvues d'un axe d'appui (9, 10) s'étendant essentiellement à la verticale du plan médian longitudinal vertical (6) du véhicule par rapport à la partie latérale (7, 7').

2. Véhicule cabriolet selon la revendication 1,
**caractérisé en ce que**
la partie centrale (8) dans la zone des deux articulations de liaison (G) peut pivoter dans la direction longitudinale du véhicule indépendamment des deux parties latérales (7, 7') soutenues côté carrosserie.

3. Véhicule cabriolet selon la revendication 1 ou 2,
**caractérisé en ce que**
le mouvement de pivotement (flèche B) de la partie centrale (8) est guidé par la force.

4. Véhicule cabriolet selon l'une des revendications 1 à 3,
**caractérisé en ce que**
dans le cas d'un mouvement de la capote (2), les trois parties (7, 7', 8) de l'étrier de fixation de la capote (5) et la lunette arrière (4) peuvent être déplacées ensemble dans la position d'ouverture et/ou de fermeture.

5. Véhicule cabriolet selon l'une revendications 1 à 4,
**caractérisé en ce que**
seule la partie centrale (8) de l'étrier de fixation de la capote (5) peut pivoter avec la lunette arrière (4) lors du mouvement de la capote (2).

6. Véhicule cabriolet selon l'une des revendications 1 à 5,
**caractérisé en ce que**
la partie centrale (8) présente une liaison avec la lunette arrière (4).

7. Véhicule cabriolet selon l'une des revendications 1 à 6,
**caractérisé en ce que**
la partie centrale (8) est reliée directement à un bord latéral transversal inférieur (12) de la lunette arrière (4) et elle n'est intégrée dans la couverture flexible (3) de la capote pliable (2) que dans la zone de son bord latéral transversal supérieur (13) et des bords latéraux longitudinaux correspondants (14, 15).

8. Véhicule cabriolet selon l'une des revendications 1 à 7,
**caractérisé en ce que**
la lunette arrière (4) en verre dur est entourée par un cadre porteur (16) essentiellement en forme de U et ouvert vers la partie centrale (8).

9. Véhicule cabriolet selon l'une des revendications 1 à 8,
**caractérisé en ce que**
la partie centrale (8) de l'étrier de fixation de la capote (5) est reliée aux deux branches latérales (17) du cadre porteur (16) en forme de U dans la zone d'un contour des rayons (18).

10. Véhicule cabriolet selon l'une des revendications 1 à 9,
**caractérisé en ce que**
chacune des deux articulations de liaison (G) est une articulation à pivot (23) définissant l'axe d'appui (9, 10) et leur partie à pivot (25) se trouvant sur une équerre d'appui (24) s'engage dans une ouverture de logement (25') d'une équerre d'appui associée opposée (26).

11. Véhicule cabriolet selon l'une des revendications 1 à 10,
**caractérisé en ce que**
la partie centrale (8) présente sur sa face supérieure soutenant la lunette arrière (4) une rainure longitudinale (20) logeant une pièce de fixation de la glace (19) et un joint d'étanchéité profilé (21') pouvant être posé côté carrosserie dans la position de fermeture de la capote pliable (2) est prévu face à la rainure sur la face inférieure de la partie centrale (8).

12. Véhicule cabriolet selon l'une des revendications 1 à 11,
**caractérisé en ce que**
la couverture (3) dans la zone angulaire entre les branches (17) du cadre porteur (16) et les parties latérales (7, 7') de l'étrier de fixation de la capote (5) est pourvue d'une poche en tissu (T).

13. Véhicule cabriolet selon l'une des revendications 1 à 12,
**caractérisé en ce que**
le cadre porteur (16) de la lunette arrière (4) présente des pièces d'appui (S) respectives reliées à la cinématique (A) de la capote pliable (2).

14. Véhicule cabriolet selon l'une des revendications 1 à 13,
**caractérisé en ce que**
le mouvement commun de la lunette arrière (4) et du cadre porteur (16) est commandé par un déplacement de la zone de la couverture (3) côté arrière.
